# EUROPEAN PATENT SPECIFICATION

(11) **EP 3 360 608 B1**
(45) Date of publication and mention of the grant of the patent: **17.06.2020**
(21) Application number: 17155643.4
(22) Date of filing: 10.02.2017
(51) Int. Cl.: B01D 29/23, B01D 29/25, B01D 29/90

(54) **WATER FILTER DEVICE**
WASSERFILTERVORRICHTUNG
DISPOSITIF DE FILTRATION D'EAU

(43) Date of publication of application: 15.08.2018
(73) Proprietor: Honeywell Technologies Sarl, 1180 Rolle (CH)
(72) Inventor: Weidner, Kurt, 73434 Aalen (DE); Haltmar, Bretislav, 664 57 Menin (CZ)
(74) Representative: Sturm, Christoph

(56) References cited:
- US-A1- 2003 178 350
- US-B1- 7 297 265

## Description

The invention relates to a water filter device, especially to a drinking water filter device.

The product leaflet "MiniPlus FK06, Filter combination, EN0H-1126GE23 R0115, year 2015, Honeywell GmbH" discloses a water filter device, especially drinking water filter device, according to the prior art. Said water filter device comprises a housing, the housing having at a first end of the same an inlet port for unfiltered water and an outlet port for filtered water, at a second end of the same a drain port accommodating a valve, and a flow chamber extending between the first end of the housing and the second end of the housing. Said water filter device further comprises a sieve unit positioned with the flow chamber, said sieve unit separating the flow chamber in a first sub-chamber for the unfiltered water and a second sub-chamber for the filtered water. The sieve unit has a basic body with a middle portion carrying a sieve mesh, a first end portion being positioned proximate to the first end of the housing and second end portion being positioned proximate to the second end of the housing.

Depending on the water quality of the unfiltered water the sieve unit, namely the sieve mesh of the same, becomes covered by dirt particles. If the water filter device does not become cleaned, the water quality of the filtered water becomes poor. For that, water filter devices need to be cleaned regularly. The cleaning can be done by replacing the sieve unit or the sieve mesh of the sieve unit or by backwashing.

It is desired to reduce the required cleaning and thereby to increase the operating time of the water filter device between the cleaning of the same.

US 7 297 265 A discloses a backwash strainer having a cyclonic flow mechanism. An inlet for unfiltered medium, a port for filtered medium and a backwash drain are all positioned at the same end of a housing. An impeller ring comprises curved vanes. Other prior art is disclosed by US 2003/178350 A1.

Against this background, a novel water filter device is provided. The novel water filter device comprises first water flow guiding blades at the first end portion of the basic body of the sieve unit, said first water flow guiding being inclined relative to a longitudinal axis of the sieve unit. Said first water flow guiding blades are positioned within the first sub-chamber for the unfiltered water. The first water flow guiding blades effect a rotational flow of the unfiltered water within the first sub-chamber from the first end portion towards the second end portion. As a result of such a rotational flow of the unfiltered water centrifugal forces act on dirt particles within the unfiltered water thereby causing these dirt particles to flow away from the sieve mesh toward an inner wall of the housing. As a result, the dirt particles are kept away from sieve mesh. The cleaning of the water filter device either by replacing the sieve unit or by backwashing can be reduced.

The drain port accommodates in addition to the valve a guide element, said guide element having second water flow guiding blades. Said second water flow guiding blades counteract the rotational flow of the unfiltered water within the first sub-chamber in the region of the guide element. In such a way the rotational flow of the unfiltered water is slowed down in the region of the guide element and the dirt particles are collected in the region of the guide element positioned below the sieve unit. As a result, the dirt particles are kept away from sieve mesh. The cleaning of the water filter device either by replacing the sieve unit or by backwashing can be reduced.

It should be noted that the combinatory use of the rotational flow of the unfiltered water effected by the first water flow guiding blades and the slowdown of said rotational flow of the unfiltered water effected by the second water flow guiding blades is preferred to keep the dirt particles away from sieve mesh.

Preferably, the first water flow guiding blades are inclined at an angle between 30° and 70°, preferred at an angle between 40° and 60°, most preferred at an angle between 45° and 55°, relative to the longitudinal axis of the sieve unit. This provides a very effective rotational flow of the unfiltered water as well as centrifugal forces acting on dirt particles within the unfiltered water.

Preferably, the second water flow guiding blades run almost parallel, preferably parallel, to the longitudinal axis of the sieve unit. This provides a very effective counter acting on the rotational flow of the unfiltered water in the region of the guide element and a very effective collecting of the dirt particles in the region of the guide element.

According to a preferred embodiment, a section of an inner wall of the housing being positioned proximate the guide element has a surface being free of ribs. This increases the effect of the second water guide blades to collect the dirt particles very effectively.

According to a preferred embodiment, the sieve mesh is provided by plain weave wire mesh in a square pattern. This further reduces the risk that the sieve mesh becomes blocked by dirt particles.

Preferred developments of the invention are provided by the dependent claims and the description which follows. Exemplary embodiments are explained in more detail on the basis of the drawing, in which:
- Figure 1: shows a cross section through a water filter device an embodiment of the invention;
- Figure 2: shows a detail of the water filter device of Figure 1;
- Figure 3: shows a side-view of a sieve unit of the water filter device of Figure 1;
- Figure 4: shows top-view of the sieve unit of Figure 3;
- Figure 5: shows a perspective view of a guide element of the water filter device of Figure 1;
- Figure 6: shows a cross section through guide element of Figure 6;
- Figure 7: shows a detail of a sieve mesh of the water filter device of Figure 1; and
- Figure 8: shows a side view of the detail of Figure 7.

The present invention relates to a water filter device. Water filter devices for the filtering of drinking water are also often called potable water filter.

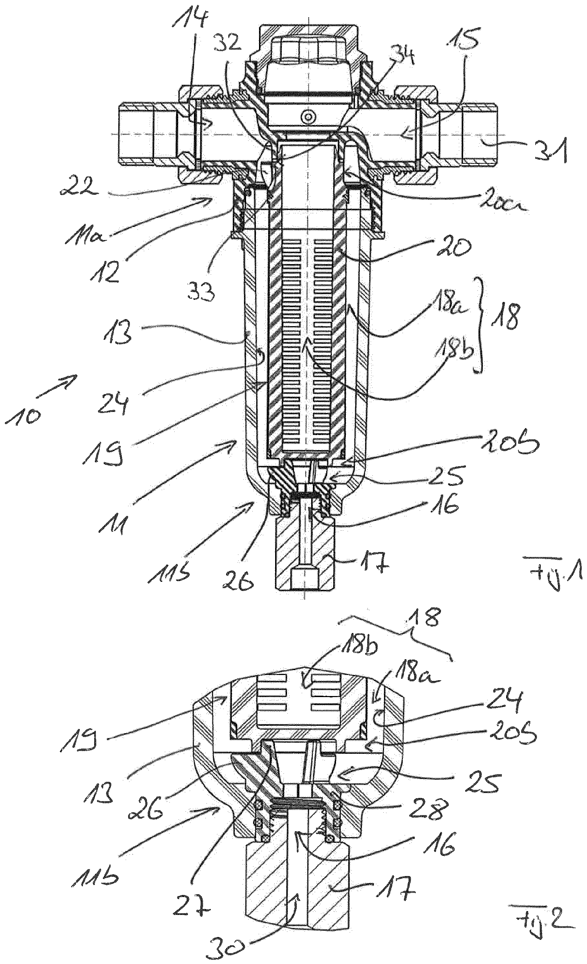

Figure 1 shows a potable water filter device 10. The water filter device 10 shown in Figures 1 and 2 comprises a housing 11 with a first, upper housing part 12 and a second, lower housing part 13. These housing parts 12, 13 are provided by separate elements are mounted together. The housing 11 provides at a first end 11a of the same, namely at the first housing part 12, an inlet port 14 for unfiltered water and an outlet port 15 for filtered water. The inlet port 14 and the outlet port 15 are coaxially aligned along a longitudinal axis 31 of the inlet port 14 and the outlet port 15. The housing 11 provides at a second end 11b of the same, namely at the second housing part 13, a drain port 16 accommodating a valve 17. The housing 11 provides further a flow chamber 18. Water flows through the flow chamber 18, the water enters into the water filter device 10 through said inlet port 14 and passes out of said water filter device 10 through said outlet port 15. The flow chamber 18 extends between the first end 11a of the housing 11 and the second end 11b of the housing 11.

The water filter device 10 comprises a sieve unit 19 positioned within said flow chamber 18. Said sieve unit 19 separates the flow chamber 18 in a first sub-chamber 18a for unfiltered water and a second sub-chamber 18b for filtered water. Unfiltered water to be filtered by the water filter device 10 enters into the water filter device 10 through the inlet port 14 of the housing 11, flows from said inlet port 14 into the first sub-chamber 18a, flows from the first sub-chamber 18a through the sieve unit 19 into the second sub-chamber 18b, and flows from the second sub-chamber 18b through the outlet port 15 of the housing 11 out of the water filter device 10.

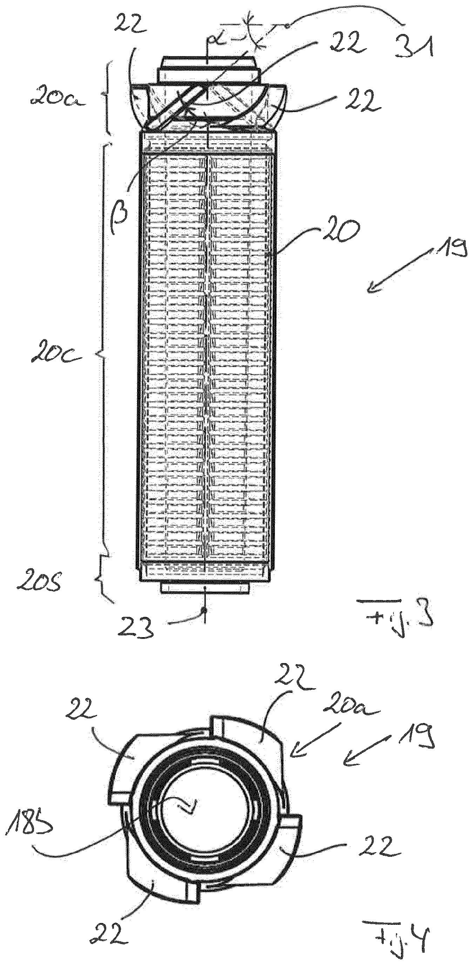

The sieve unit 19 (see Figures 3, 4) has a basic body 20 with a first end portion 20a being positioned proximate to the first end 11a of the housing 11 and second end portion 20b being positioned proximate to the second end 11b of the housing 11 and a middle portion 20c extending between the two end portions 20a, 20b carrying a sieve mesh 21. The sieve unit 19 has a longitudinal axis 23 running perpendicular to the longitudinal axis 31 of the inlet port 14 and the outlet port 15.

The first end portion 20a of the basic body 20 of the sieve unit 19 comprises first water flow guiding blades 22 being inclined relative to a longitudinal axis 23 of the sieve unit 19 and relative to the longitudinal axis 31 of the inlet port 14 and the outlet port 15. Said first water flow guiding blades 22 are positioned within the first sub-chamber 18a for the unfiltered water proximate the first end 11a of the housing 11.

The first water flow guiding blades 22 which are inclined relative to a longitudinal axis 23 of the sieve unit 19 cause a rotational flow of the unfiltered water within the first sub-chamber 18a from the first end portion 20a towards the second end portion 20b.

As a result of such a rotational flow of the unfiltered water within the first sub-chamber 18a centrifugal forces act on dirt particles within the unfiltered water thereby causing these dirt particles to flow away from the sieve mesh 21 towards an inner wall 24 of the housing 11, namely of the second housing part 13 of the housing 11. As a result, the dirt particles are kept away from sieve mesh 21.

Preferably, the first water flow guiding blades 22 are inclined at an angle αbetween 20° and 60°, preferred at an angle αbetween 30° and 50°, most preferred at an angle αbetween 35° and 45°, relative to the longitudinal axis 31 of the inlet port 14 and the outlet port 15.

As result, an angle β between the first water flow guiding blades 22 and the longitudinal axis 23 of the sieve unit 19 is between 30° and 70°, preferred at an angle β between 40° and 60°, most preferred at an angle β between 45° and 55°. This provides a very effective rotational flow of the unfiltered water as well as centrifugal forces acting on dirt particles within the unfiltered water.

The first water flow guiding blades 22 are integral elements of the sieve unit 19, namely of the first end portion 20a of the basic body 20 of the sieve unit 19.

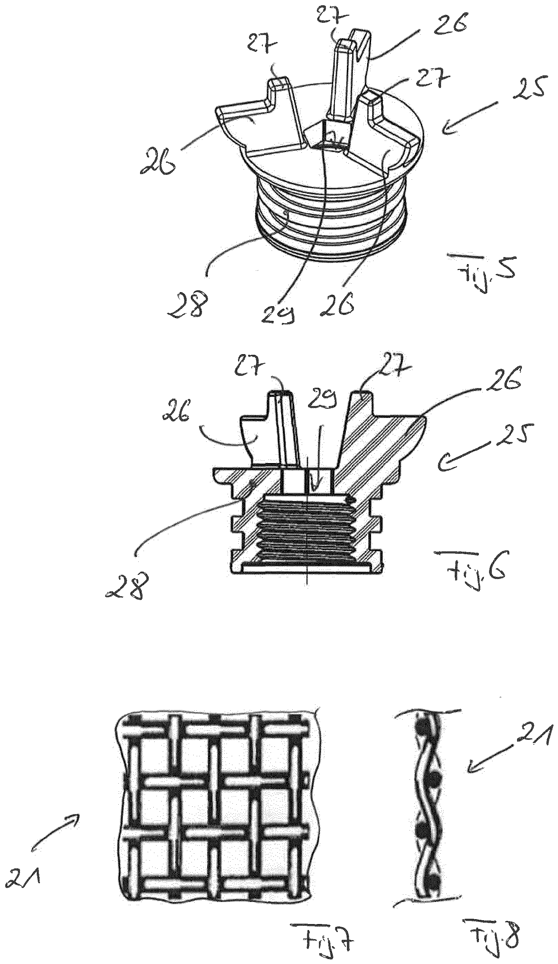

The drain port 16 of the housing 11, namely of the lower housing part 13, accommodates in addition to the valve 17 a guide element 25 (see Figures 5, 6). Said guide element 25 has a basic body 28 carrying second water flow guiding blades 26. The guide element 25 is positioned below the sieve unit 19. The second water flow guiding blades 26 are integral elements of the basic body 28.

The second water flow guiding blades 26 have axial protrusions 27. Said axial protrusions 27 provide stop elements for the sieve unit 19 acting on the lower end portion 20b of the basic body 20 of the sieve unit 19. Said axial protrusions 27 align the sieve unit 19 within the flow chamber 18. The axial protrusions 27 are integral elements of the second water flow guiding blades 26.

The second water flow guiding blades 26 provided by the guide element 25 are positioned within the first sub-chamber 18a for the unfiltered water below the sieve mesh 21 carried by the middle portion 20c of the basic body 20 of the sieve unit 19. The second water flow guiding blades 26 counteract the rotational flow of the unfiltered water within the first sub-chamber 18a in the region of the guide element 25. As a result, the rotational flow of the unfiltered water effected by the first water flow guiding blades 22 is slowed down in the region of the guide element 25 and the dirt particles are collected in the region of the guide element 25 positioned below the sieve unit 19. As a result, the dirt particles are kept away from sieve mesh 21.

Preferably, the second water flow guiding blades 26 provided by the guide element 25 run almost parallel, preferably parallel, to the longitudinal axis of the sieve unit 19. This provides a very effective slowdown of the rotational flow of the unfiltered water in the region of the guide element 25 and a very effective collecting of the dirt particles in the region of the guide element 25.

In the shown embodiment, the first end portion 20a of the basic body 20 of the sieve unit 19 has four first water flow guiding blades 22 and the guide element 25 has three second water flow guiding blades 26. The number of the blades 22, 26 may differ from the shown embodiment.

The blades 22, 26 are preferably equally positioned or uniformly distributed around the circumference of the first end portion 20a of the basic body 20 or the basic body 28 of the guide element 25.

The basic body 28 of the guide element 25 has a flow through channel 29 being in communication with a flow channel 30 of the valve 17. During cleaning of the water filter device 10 dirt particles can be removed though the drain port 16 when the valve 17 is opened.

At least a section of an inner wall 24 of the housing 11, namely of the lower housing part 13, being positioned proximate the guide element 25 has a surface being free of ribs and thereby being free of grooves. This increases the effect of the second water guide blades 26 to collect the dirt particles very effectively in the region of the guide element 25 below the sieve unit 19. Preferably, the entire inner wall 24 of second housing part 13 is free of ribs and grooves.

The sieve mesh 21 (see Figures 8, 9) is preferably provided by plain weave wire mesh in a square pattern. This reduces the risk that the sieve mesh 21 becomes blocked by dirt particles. Other types of filter meshes can be used as well.

The first end portion 20a of the basic body 20 of the sieve unit 19 is guided by an inner wall section 32 of the first housing part 12. The inner wall section 32 of the first housing part 12 defines an opening into which the first end portion 20a of the basic body 20 of the sieve unit 19 penetrates. The first end portion 20a of the basic body 20 of the sieve unit 19 comprises a recess 33 acting as stop means limiting the penetration depth of the first end portion 20a of the basic body 20 of the sieve unit 19 into the opening defined by the inner wall section 32 of the first housing part 12. A sealing element 34 is positioned between said recess 33 of the first end portion 20a of the basic body 20 of the sieve unit 19 and the inner wall section 32 of the first housing part 12.

The invention is related to water filter device with backwashing functionality and to water filter device without backwashing functionality.

### List of reference signs

- 10: water filter device
- 11: housing
- 11a: first end of the housing
- 11b: second end of the housing
- 12: first housing part
- 13: second housing part
- 14: inlet opening
- 15: outlet opening
- 16: drain port
- 17: valve
- 18: flow chamber
- 18a: first sub-chamber
- 18b: second sub-chamber
- 19: sieve unit
- 20: basic body
- 20a: end portion
- 20b: end portion
- 20c: middle portion
- 21: sieve mesh
- 22: first water flow guiding blade
- 23: longitudinal axis
- 24: inner wall
- 25: guide element
- 26: second water flow guiding blade
- 27: axial protrusion
- 28: basic body
- 29: flow through channel
- 30: flow channel
- 31: longitudinal axis
- 32: wall section
- 33: recess
- 34: sealing element

## Claims

1. Water filter device (10), comprising:
a housing (11), said housing (11) having
at a first end (11a) of the same an inlet port (14) for unfiltered water and an outlet port (15) for filtered water,
at a second end (11b) of the same a drain port (16) accommodating a valve (17),
a flow chamber (18) extending between the first end (11a) of the housing (11) and the second end (11b) of the housing (11);
a sieve unit (19) positioned with the flow chamber (18), said sieve unit (19) separating the flow chamber (18) in a first sub-chamber (18a) for the unfiltered water and a second sub-chamber (18b) for the filtered water, the sieve unit (19) having
a basic body (20) with a middle portion (20c) carrying a sieve mesh (21), a first end portion (20a) being positioned proximate to the first end (11a) of the housing (11) and second end portion (20b) being positioned proximate to the second end (11b) of the housing (11),
**characterized in that**
the first end portion (20a) of the basic body (20) of the sieve unit (19) comprises first water flow guiding blades (22) being inclined relative to a longitudinal axis (23) of the sieve unit (19), said first water flow guiding blades (22) being positioned within the first sub-chamber (18a) for the unfiltered water,
the drain port (16) accommodates in addition to the valve (17) a guide element (25), said guide element (25) having second water flow guiding blades (26).

2. Water filter device as claimed in claim 1, **characterized in that** said first water flow guiding blades (22) effect a rotational flow of the unfiltered water within the first sub-chamber (18a) from the first end portion (20a) towards the second end portion (20b).

3. Water filter device as claimed in claim 1 or 2, **characterized in that** the first water flow guiding blades (22) are inclined at an angle between 30° and 70° relative to the longitudinal axis (23) of the sieve unit (19).

4. Water filter device as claimed in claim 3, **characterized in that** the first water flow guiding blades (22) are inclined at an angle between 40° and 60° relative to the longitudinal axis (23) of the sieve unit (19)

5. Water filter device as claimed in claim 4, **characterized in that** the first water flow guiding blades (22) are inclined at an angle between 45° and 55° relative to the longitudinal axis (23) of the sieve unit (19).

6. Water filter device as claimed in one of claims 1 to 5, **characterized in that** said second water flow guiding blades (26) are positioned within the first sub-chamber (18a) for the unfiltered water.

7. Water filter device as claimed in one of claims 1 to 6, **characterized in that** said second water flow guiding blades (26) counteract the rotational flow of the unfiltered water within the first sub-chamber (18a).

8. Water filter device as claimed in one of claims 1 to 7, **characterized in that** the second water flow guiding blades (26) run almost parallel, preferably parallel, to the longitudinal axis (23) of the sieve unit (19).

9. Water filter device as claimed in one of claims 1 to 8, **characterized in that** a section of an inner wall (24) of the housing (11) being positioned proximate the guide element (25) has an surface being free of ribs.

10. Water filter device as claimed in one of claims 1 to 9, **characterized in that** axial protrusions (27) of the second water flow guiding blades (26) of guide element (25) provide stop elements for the sieve unit (19) which is positioned above the guide element (25).

11. Water filter device as claimed in one of claims 1 to 10, **characterized in that** the sieve mesh (21) is provided by plain weave wire mesh in a square pattern.

12. Water filter device as claimed in one of claims 1 to 11, **characterized in that** the housing (11) comprises a housing part (13) proving the drain port and accommodating the sieve unit (19), wherein the entire inner wall (24) of housing part (13) has an surface being free of ribs.

## Patentansprüche

1. Wasserfiltervorrichtung (10), Folgendes aufweisend:
ein Gehäuse (11), wobei das Gehäuse (11) Folgendes aufweist:
einen Einlassstutzen (14) für ungefiltertes Wasser und einen Auslassstutzen (15) für gefiltertes Wasser an einem ersten Ende (11a),
einen Ablassstutzen (16), der ein Ventil (17) enthält, an einem zweiten Ende (11b),
eine Strömungskammer (18), die sich zwischen dem ersten Ende (11a) des Gehäuses (11) und dem zweiten Ende (11b) des Gehäuses (11) erstreckt;
eine Siebeinheit (19), die in der Strömungskammer (18) positioniert ist, wobei die Siebeinheit (19) die Strömungskammer (18) in eine erste Teilkammer (18a) für das ungefilterte Wasser und eine zweite Teilkammer (18b) für das gefilterte Wasser teilt, wobei die Siebeinheit (19) Folgendes aufweist:
einen Grundkörper (20) mit einem Mittelabschnitt (20c), der ein Siebgitter (21) trägt, wobei ein erster Endabschnitt (20a) in der Nähe des ersten Endes (11a) des Gehäuses (11) positioniert ist und ein zweiter Endabschnitt (20b) in der Nähe des zweiten Endes (11b) des Gehäuses (11) positioniert ist,
**dadurch gekennzeichnet, dass**
der erste Endabschnitt (20a) des Grundkörpers (20) der Siebeinheit (19) erste Wasserstromführungsschaufeln (22) aufweist, die in Bezug zu einer Längsachse (23) der Siebeinheit (19) angewinkelt sind, wobei die ersten Wasserstromführungsschaufeln (22) innerhalb der ersten Teilkammer (18a) für das ungefilterte Wasser positioniert sind,
wobei der Ablassstutzen (16) zusätzlich zu dem Ventil (17) ein Führungselement (25) enthält, wobei das Führungselement (25) zweite Wasserstromführungsschaufeln (26) aufweist.

2. Wasserfiltervorrichtung nach Anspruch 1, **dadurch gekennzeichnet, dass** die ersten Wasserstromführungsschaufeln (22) eine Drehströmung des ungefilterten Wassers innerhalb der ersten Teilkammer (18a) vom ersten Endabschnitt (20a) zum zweiten Endabschnitt (20b) bewirken.

3. Wasserfiltervorrichtung nach Anspruch 1 oder 2, **dadurch gekennzeichnet, dass** die ersten Wasserstromführungsschaufeln (22) in einem Winkel zwischen 30° und 70° in Bezug zur Längsachse (23) der Siebeinheit (19) angewinkelt sind.

4. Wasserfiltervorrichtung nach Anspruch 3, **dadurch gekennzeichnet, dass** die ersten Wasserstromführungsschaufeln (22) in einem Winkel zwischen 40° und 60° in Bezug zur Längsachse (23) der Siebeinheit (19) angewinkelt sind.

5. Wasserfiltervorrichtung nach Anspruch 4, **dadurch gekennzeichnet, dass** die ersten Wasserstromführungsschaufeln (22) in einem Winkel zwischen 45° und 55° in Bezug zur Längsachse (23) der Siebeinheit (19) angewinkelt sind.

6. Wasserfiltervorrichtung nach einem der Ansprüche 1 bis 5, **dadurch gekennzeichnet, dass** die zweiten Wasserstromführungsschaufeln (26) innerhalb der ersten Teilkammer (18a) für ungefiltertes Wasser positioniert sind.

7. Wasserfiltervorrichtung nach einem der Ansprüche 1 bis 6, **dadurch gekennzeichnet, dass** die zweiten Wasserstromführungsschaufeln (26) einer Drehströmung des ungefilterten Wassers innerhalb der ersten Teilkammer (18a) entgegenwirken.

8. Wasserfiltervorrichtung nach einem der Ansprüche 1 bis 7, **dadurch gekennzeichnet, dass** die zweiten Wasserstromführungsschaufeln (26) fast parallel, vorzugsweise parallel, zur Längsachse (23) der Siebeinheit (19) verlaufen.

9. Wasserfiltervorrichtung nach einem der Ansprüche 1 bis 8, **dadurch gekennzeichnet, dass** ein Teil einer Innenwand (24) des Gehäuses (11), der in der Nähe des Führungselements (25) positioniert ist, eine rippenfreie Oberfläche aufweist.

10. Wasserfiltervorrichtung nach einem der Ansprüche 1 bis 9, **dadurch gekennzeichnet, dass** axiale Vorsprünge (27) der zweiten Wasserstromführungsschaufeln (26) des Führungselements (25) Anschlagelemente für die Siebeinheit (19) vorsehen, die über dem Führungselement (25) angeordnet ist.

11. Wasserfiltervorrichtung nach einem der Ansprüche 1 bis 10, **dadurch gekennzeichnet, dass** das Siebgitter (21) durch ein einfaches Drahtgewebegitter mit einem quadratischen Muster vorgesehen ist.

12. Wasserfiltervorrichtung nach einem der Ansprüche 1 bis 11, **dadurch gekennzeichnet, dass** das Gehäuse (11) einen Gehäuseteil (13) aufweist, der den Ablassstutzen vorsieht und die Siebeinheit (19) enthält, wobei die gesamte Innenwand (24) des Gehäuseteils (13) eine rippenfreie Oberfläche aufweist.

## Revendications

1. Dispositif de filtration d'eau (10) comprenant :
un logement (11), ledit logement (11) ayant
au niveau d'une première extrémité (11a) de celui-ci, un orifice d'entrée (14) pour l'eau non filtrée et un orifice de sortie (15) pour l'eau filtrée,
au niveau d'une seconde extrémité (11b) de celui-ci, un orifice de vidange (16) recevant une vanne (17),
une chambre d'écoulement (18) s'étendant entre la première extrémité (11a) du logement (11) et la seconde extrémité (11b) du logement (11) ;
une unité de tamisage (19) positionnée avec la chambre d'écoulement (18), ladite unité de tamisage (19) séparant la chambre d'écoulement (18) en une première sous-chambre (18a) pour l'eau non filtrée et une seconde sous-chambre (18b) pour l'eau filtrée, l'unité de tamisage (19) ayant
un corps de base (20) avec une partie centrale (20c) portant une maille de tamis (21), une première partie d'extrémité (20a) étant positionnée à proximité de la première extrémité (11a) du logement (11) et une seconde partie d'extrémité (20b) étant positionnée à proximité de la seconde extrémité (11b) du logement (11),
**caractérisé en ce que**
la première partie d'extrémité (20a) du corps de base (20) de l'unité de tamisage (19) comprend des premières pales (22) de guidage d'écoulement d'eau inclinées par rapport à un axe longitudinal (23) de l'unité de tamisage (19), lesdites premières pales (22) de guidage d'écoulement d'eau étant positionnées à l'intérieur de la première sous-chambre (18a) pour l'eau non filtrée,
l'orifice de vidange (16) reçoit, en plus de la vanne (17), un élément de guidage (25), ledit élément de guidage (25) ayant des secondes pales (26) de guidage d'écoulement d'eau.

2. Dispositif de filtration d'eau selon la revendication 1, **caractérisé en ce que** lesdites premières pales (22) de guidage d'écoulement d'eau effectuent un écoulement rotatif de l'eau non filtrée dans la première sous-chambre (18a) de la première partie d'extrémité (20a) vers la seconde partie d'extrémité (20b).

3. Dispositif de filtration d'eau selon la revendication 1 ou 2, **caractérisé en ce que** les premières pales (22) de guidage d'écoulement d'eau sont inclinées selon un angle compris entre 30° et 70° par rapport à l'axe longitudinal (23) de l'unité de tamisage (19).

4. Dispositif de filtration d'eau selon la revendication 3, **caractérisé en ce que** les premières pales (22) de guidage d'écoulement d'eau sont inclinées selon un angle compris entre 40 ° et 60 ° par rapport à l'axe longitudinal (23) de l'unité de tamisage (19).

5. Dispositif de filtration d'eau selon la revendication 4, **caractérisé en ce que** les premières pales (22) de guidage d'écoulement d'eau sont inclinées selon un angle compris entre 45 ° et 55 ° par rapport à l'axe longitudinal (23) de l'unité de tamisage (19).

6. Dispositif de filtration d'eau selon l'une des revendications 1 à 5, **caractérisé en ce que** lesdites secondes pales (26) de guidage d'écoulement d'eau sont positionnées dans la première sous-chambre (18a) pour l'eau non filtrée.

7. Dispositif de filtration d'eau selon l'une des revendications 1 à 6, **caractérisé en ce que** les secondes pales (26) de guidage d'écoulement d'eau s'opposent à l'écoulement rotatif de l'eau non filtrée dans la première sous-chambre (18a).

8. Dispositif de filtration d'eau selon l'une des revendications 1 à 7, **caractérisé en ce que** les secondes pales (26) de guidage d'écoulement d'eau s'étendent presque parallèlement, de préférence parallèlement, à l'axe longitudinal (23) de l'unité de tamisage (19).

9. Dispositif de filtration d'eau selon l'une des revendications 1 à 8, **caractérisé en ce qu'**une section d'une paroi intérieure (24) du logement (11), placée à proximité de l'élément de guidage (25), présente une surface exempte de nervures.

10. Dispositif de filtration d'eau selon l'une des revendications 1 à 9, **caractérisé en ce que** des saillies axiales (27) des secondes pales (26) de guidage d'écoulement d'eau de l'élément de guidage (25) fournissent des éléments d'arrêt pour l'unité de tamisage (19) qui est positionnée au-dessus de l'élément de guidage (25).

11. Dispositif de filtration d'eau selon l'une des revendications 1 à 10, **caractérisé en ce que** la maille de tamis (21) est fournie par une maille métallique à armure toile dans un motif carré.

12. Dispositif de filtration d'eau selon l'une des revendications 1 à 11, **caractérisé en ce que** le logement (11) comprend une partie de logement (13) comprenant l'orifice de vidange et recevant l'unité de tamisage (19), la paroi intérieure (24) entière de la partie de logement (13) ayant une surface exempte de nervures.
